# EUROPÄISCHE PATENTSCHRIFT

(11) **EP 1 734 830 B1**
(45) Veröffentlichungstag und Bekanntmachung des Hinweises auf die Patenterteilung: **28.12.2016**
(21) Anmeldenummer: 05730726.6
(22) Anmeldetag: 02.04.2005
(51) Int. Cl.: A22C 13/00, D21H 27/10

(54) **SCHLAUCHFÖRMIGE NAHRUNGSMITTELHÜLLE MIT ÜBERTRAGBARER INNENSCHICHT**
TUBULAR FOODSTUFF SLEEVE WITH TRANSFERABLE INNER LAYER
ENVELOPPE TUBULAIRE POUR PRODUITS ALIMENTAIRES POURVUE D'UNE COUCHE INTERIEURE A TRANSFERT

(30) Priorität: 08.04.2004 DE 102004017351
(43) Veröffentlichungstag der Anmeldung: 27.12.2006
(73) Patentinhaber: Kalle GmbH, 65203 Wiesbaden (DE)
(72) Erfinder: KÖNIG, Martina, 65207 Wiesbaden (DE); EFFERN, Volker, 65321 Heidenrod-Kemel (DE); HOFMANN, Sabrina, 56357 Holzhausen (DE); KLEINSCHMIDT, Roland, 65232 Taunusstein (DE); BORST, Ralf, 65439 Flörsheim (DE)
(74) Vertreter: Plate, Jürgen
(86) Internationale Anmeldenummer: PCT/EP2005/003483
(87) Internationale Veröffentlichungsnummer: WO 2005/096828

(56) Entgegenhaltungen:
- EP-A- 0 264 873
- EP-A- 0 473 952
- EP-A- 0 610 753
- WO-A1-2004/086871
- DE-A1- 10 013 357
- US-A- 4 778 639
- US-A- 4 781 931
- US-A- 5 270 067

## Beschreibung

Die vorliegende Erfindung betrifft eine schlauchförmige Nahrungsmittelhülle, die auf der Innenseite mit übertragbaren Farb- und/oder Geschmacksstoffen imprägniert ist. Sie betrifft daneben ihre Verwendung als künstliche Wursthülle.

Schlauchförmige Nahrungsmittelhüllen, speziell Wursthüllen, die auf das Lebensmittel übertragbare Stoffe enthalten, wie Lebensmittelfarben, Gewürze, Aromen, Geschmacksstoffe oder ähnliches, sind bereits bekannt. So ist in der EP-A 0 986 957 eine Hülle beschrieben mit einer Schicht auf Basis von Polyolefin, Polyester, Polyvinylidenchlorid, Polyvinylchlorid oder Polystyrol sowie einer weiteren Schicht, die für den Nahrungsmittelkontakt vorgesehen ist. Diese innere Schicht umfaßt ein Polysaccharid und/oder Protein als Bindemittel und, vermischt damit, einen Aroma- und/oder Geschmacksstoff, wie Grillhähnchenaroma, Zimt, Karamel, Honig, Limonenöl oder Orangenöl. In der WO 98/31731 ist eine ganz ähnliche Nahrungsmittelhülle offenbart, bei der die innere Schicht zusätzlich noch einen Vernetzer, beispielsweise eine Verbindung mit 2 oder mehr Carbaldehydgruppen, enthält.

Die Hülle gemäß der EP-A 0 992 194 umfaßt ebenfalls eine als Wasserdampf- und/oder Sauerstoff-Barriere wirkende Schicht aus synthetischen Polymeren. Hier ist diese Schicht jedoch verbunden mit einer Innenlage aus einem Faservlies oder ähnlichem Material, die mit übertragbaren Farb- und/oder Aromastoffen, insbesondere mit Flüssigrauch, getränkt ist.

Die Wursthülle gemäß der DE-A 195 00 470 weist auf der Innenseite eine im flüssigen Zustand erstarrende Haftschicht auf. Vor dem Erstarren werden darauf Gewürzpartikel, insbesondere Pfefferkörner oder gemahlener Pfeffer, aufgebracht. Das geschieht insbesondere durch Aufschleudern mit speziellen Vorrichtungen.

In der WO 00/40093 ist eine Nahrungsmittelhülle aus einem synthetischen thermoplastischen Material offenbart, in die ein Additiv eingearbeitet ist, das für die Bildung von winzigen (0,002 bis 1 µm) Poren und/oder Kanälen sorgt. Die Hülle wird dadurch durchlässig für Rauch oder ähnliche Stoffe. Zusätzlich kann das thermoplastische Material noch mit Farb- und oder Aromastoffe vermischt sein. Da der Farb- und/oder Aromastoff in die Hülle eingearbeitet ist, wird er nur eingeschränkt übertragen auf das in der Hülle befindliche Nahrungsmittel.

EP 0 264 873 (≈US-A 4 778 639 und 4 781 931) hat eine nach dem Viskoseverfahren hergestellte Cellulosehülle zum Gegenstand, in deren Cellulosematrix Karamel fest eingebaut ist, so daß es nicht übertragen und nicht durch Wasser(dampf) extrahiert werden kann. Die Hülle ist durch das Karamel orange bis dunkelbraun eingefärbt. Zusätzlich kann sie noch mit Flüssigrauch imprägniert sein. Dieser ist im Gegensatz zu dem Karamel auf ein in der Hülle befindliches Nahrungsmittel übertragbar.

US-A 5 270 067 offenbart Cellulosehüllen, die auch mit einer Faserpapiereinlage verstärkt sein können. Imprägniert sind die Cellulose(faser)därme mit einem speziellen Flüssigrauch, der einen hohen Bräunungsgrad, jedoch nur einen geringen Geruch aufweist. Der Rauch und damit die Rauchfarbe kann auf ein in der Hülle befindliches Nahrungsmittel übertragen werden.

Es bestand daher nach wie vor die Aufgabe, eine Nahrungsmittelhülle zur Verfügung zu stellen, die einen Farbstoff, der vorzugsweise gleichzeitig auch ein Aroma- und/oder Geschmacksstoff ist, speichern und dann an ein in der Hülle befindliches Nahrungsmittel schnell und gleichmäßig in ausreichender Menge abgeben kann.

Gegenstand der vorliegenden Erfindung ist demgemäß eine nach dem Viskoseverfahren hergestellte schlauchförmige Nahrungsmittelhülle gemäß Anspruch 1 auf Basis von regenerierter Cellulose, die auf der Innenseite mit mindestens einem übertragbaren Lebensmittelzusatzstoff imprägniert oder beschichtet ist, dadurch gekennzeichnet, dass der Lebensmittelzusatzstoff mindestens einen Lebensmittelfarbstoff und/oder ein farbgebendes Nahrungsmittel umfaßt, ausgewählt aus der Gruppe Zuckercouleur, Cochenillerot A, Braun HT, Carmin, Paprika-Oleoresin, Kenzentrate und Extrakte aus Holunder, Plaume oder Tomate, Getreide oder Zubereitungen davon, Gewürze, Kaffee, Kakao, Zichorie, Johannesbrotmehl, Früchte, Paprika sowie Gemischen davon, jedoch kein Bindemittel, und dass der Lebensmittelfarbstoff und/oder das farbgebende Lebensmittel kombiniert ist mit Lecithin. Vorzugsweise hat der Lebensmittelfarbstoff oder das farbgebende Nahrungsmittel daneben auch aroma- und/oder geschmacksverstärkende oder -modifizierende Wirkung.

Der Lebensmittelfarbstoff oder das farbgebende Nahrungsmittel (im Zusammenhang mit der vorliegenden Erfindung zusammen als "farbgebende Mittel" bezeichnet) wird allgemein in Form einer (wäßrigen) Lösung, Emulsion oder Dispersion aufgebracht. Feste farbgebende Mittel sollten fein gemahlen sein, wobei die maximale Partikelgröße bevorzugt weniger als 0,5 mm beträgt. Die mittlere Partikelgröße beträgt allgemein weniger als 0,3 mm, bevorzugt weniger als 0,2 mm, besonders bevorzugt 5 bis 300 µm, speziell 10 bis 150 µm. Die Partikelgröße ist wichtig um eine ausreichende Haftung an der Innenseite der Nahrungsmittelhülle zu gewährleisten. Zu große Partikel würden im übrigen von dem Wurstbrät beim Füllen fortgerissen.

Die Imprägnierung oder Beschichtung auf der Innenseite der erfindungsgemäßen Nahrungsmittelhülle umfaßt kein Bindemittel. Eigenfarbe, Geschmack und/oder Aroma des farbgebenden Mittels werden daher nicht abgeschwächt oder verfälscht. Die für das jeweilige farbgebende Mittel typischen Eigenschaften kommen daher besonders gut zur Geltung.

Farbgebende Mittel sind Zuckercouleur, Lebensmittelfarbstoffe E124 (Cochenillerot A), E155 (Braun HT), E120 (Carmin), Paprika-Oleoresin (E160C), Konzentrate und Extrakte aus Holunder, Pflaume oder Tomate, Getreide (insbesondere Gerste) und Zubereitungen davon (wie Malz oder Malzextrakt), Gewürze (z.B. Chili), Karamel, Kaffee, Kakao, Zichorie, Johannisbrotmehl, Früchte (z.B. Ananas) oder Paprika sowie Gemische davon. Soweit es nicht bereits wasserlöslich ist, wird das farbgebende Mittel zweckmäßig zerkleinert oder gemahlen (beispielsweise nach vorheriger Gefriertrocknung), so daß sich damit eine gleichmäßige, relativ dünne und gut haftende Innenbeschichtung herstellen läßt.

Das farbgebende Mittel ist kombiniert mit mindestens einer Komponente, die die Benetzbarkeit der Innenseite der Hülle verbessert. Bei dieser Komponente handelt es sich um Lecithin. Es gewährleistet einen besonders gleichmäßigen und unterbrechungsfreien Auftrag des farbgebenden Mittels. Der Anteil der Komponente an der Beschichtungs- bzw. Imprägnierungsflüssigkeit liegt zweckmäßig bei etwa 3 bis 45 Gew.-%, bevorzugt etwa 5 bis 35 Gew.-%.

Die Menge, in der das farbgebende Mittel aufgebracht wird, hängt ganz wesentlich von dessen Art ab. In den meisten Fällen hat es sich als zweckmäßig erwiesen, das Mittel in einer Menge von 3 bis 18 g/m², bevorzugt von 5 bis 15 g/m², aufzubringen. Das Gesamtgewicht der Imprägnierung oder Beschichtung beträgt nach dem Trocknen bevorzugt etwa 3 bis 30 g/m², besonders bevorzugt etwa 5 bis 20 g/m².

Das Grundmaterial für die erfindungsgemäße Nahrungsmittelhülle ist eine schlauchförmige Hülle auf Basis von Cellulosehydrat. Die schlauchförmige Hülle auf Basis von Cellulosehydrat weist zweckmäßig noch eine innere Faserverstärkung auf, beispielsweise aus einem Faserpapier, insbesondere aus Hanffaserpapier. Diese Hülle ist nach dem Viskoseverfahren hergestellt. Darin wird die Faserverstärkung zu einem Schlauch mit überlappenden Längskanten geformt, der dann mit Viskose, d.h. mit einer stark alkalischen Cellulosexanthogenat-Lösung, von außen, von innen oder von beiden Seiten beschichtet wird. Anschließend wird die Cellulose in einem saueren Fällbad koaguliert und regeneriert. Der Schlauch durchläuft danach noch mehrere Waschkufen, gegebenenfalls auch eine Weichmacherkufe, in der sich beispielsweise eine wäßrige Glycerinlösung befindet.

Das Beschichten oder Imprägnieren der Nahrungsmittelhülle auf der Innenseite kann nach Verfahren erfolgen, die dem Fachmann prinzipiell bekannt sind. In einem besonders einfachen Verfahren wird die Imprägnierung oder Beschichtung in den Herstellungsprozeß der Hülle einbezogen. Im Fall der Hülle auf Basis von Cellulosehydrat wird eine Flüssigkeitsblase in einer kontinuierlich sich neu bildenden Schlaufe der Hülle gehalten während die Hülle in Maschinenrichtung weiterbefördert wird (bekannt als "slug coating"). Um die Benetzung der Innenseite der Hülle zu verbessern, kann der (im allgemeinen wäßrigen) Beschichtungsflüssigkeit ein oberflächenaktives Mittel zugegeben werden. Weiterhin hat es sich als zweckmäßig erwiesen, die Viskosität der Beschichtungsflüssigkeit durch den Zusatz von Lecithin oder ähnlichen zumindest teilweise wasserlöslichen Stoffen (die keine Bindemittel sind) zu erhöhen. Damit läßt sich ein dickerer Film auf der Innenseite erzeugen, der entsprechend mehr von dem farbgebenden Mittel enthält. Die Beschichtungsflüssigkeit kann darüber hinaus übliche Weichmacher, wie Glycerin, enthalten. Die imprägnierte oder beschichtete Hülle kann dann wie üblich einen Trockner durchlaufen. Falls notwendig, wird die Hülle anschließend auf die gewünschte Endfeuchte gebracht ("konditioniert"), aufgerollt und verpackt.

Alternativ oder auch zusätzlich zu dieser Art der Beschichtung bzw. Imprägnierung kann auch eine Innendornbesprühung beim Raffen der Hülle erfolgen. Das ist besonders dann zweckmäßig, wenn wasserlösliche farbgebende Mittel verwendet werden.

Verwendung findet die erfindungsgemäße Nahrungsmittelhülle als künstliche Wursthülle, insbesondere für Brühwurst- oder Rohwurstsorten, wie Fleischwurst oder Salami.

Die nachfolgenden Beispiele sollen die Erfindung illustrieren. Prozente sind darin Gewichtsprozente, soweit nicht anders angegeben oder aus dem Zusammenhang unmittelbar ersichtlich.

### Beispiel 1

Eine farblose, mit einem 19 g Hanffaserpapier verstärkte Cellulosehydrathülle vom Kaliber 49 wurde mit Hilfe einer Flüssigkeitsblase innen imprägniert. Die Imprägnierungsflüssigkeit bestand aus

| | |
|---|---|
| 35 % | wasserlöslicher Gerstenmalz-Extrakt der Firma Alnatura |
| 30 % | Lecithin und |
| 35 % | Wasser. |

Die Hülle wurde durch ein Quetschwalzenpaar hindurchgeführt und anschließend im aufgeblasenen Zustand mit Heißluft getrocknet, dann auf eine Feuchte von 12 % konditioniert und aufgerollt. Die Rollenware wurde zu einseitig verschlossenen Abschnitten konfektioniert. Diese Abschnitte wurden mit Brühwurstbrät gefüllt, mit einem Clip verschlossen und mit Wasserdampf von etwa 80 °C etwa 65 min. lang gebrüht. Die Wurst erreichte dabei eine Kerntemperatur von etwa 72 °C. Nach dem Abkühlen wurde die Hülle abgezogen. Das Wurstbrät zeigte außen einen deutlichen braunen Rand, der sehr appetitlich aussah.

### Beispiel 2

Beispiel 1 wurde wiederholt mit der einzigen Abweichung, daß das nunmehr eine Imprägnierungsflüssigkeit aus

| | |
|---|---|
| 20 % | Karamelpulver, |
| 15 % | Kakaopulver (der Firma Bensdorp) |
| 30 % | Lecithin und |
| 35 % | Wasser |

### verwendet wurde.

Das Wurstbrät zeigte nach dem Abschälen der Hülle einen dunkelbraunen Rand auf der Außenseite, der besonders wohlschmeckend war.

## Patentansprüche

1. Nach dem Viskoseverfahren hergestellte schlauchförmige Nahrungsmittelhülle auf Basis von regenerierter Cellulose, die auf der Innenseite mit mindestens einem übertragbaren Lebensmittelzusatzstoff imprägniert oder beschichtet ist, **dadurch gekennzeichnet, daß** der Lebensmittelzusatzstoff mindestens einen Lebensmittelfarbstoff und/oder ein farbgebendes Lebensmittel umfaßt, ausgewählt aus der Gruppe Zuckercouleur, Cochenillerot A, Braun HT, Carmin, Paprika-Oleoresin, Konzentrate und Extrakte aus Holunder, Pflaume oder Tomate, Getreide und Zubereitungen davon, Gewürze, Kaffee, Kakao, Zichorie, Johannisbrotmehl, Früchte, Paprika sowie Gemischen davon, jedoch kein Bindemittel, und daß der Lebensmittelfarbstoff und/oder das farbgebende Lebensmittel kombiniert ist mit Lecithin, wobei der Lebensmittelzusatzstoff an ein in der Hülle befindliches Nahrungsmittel abgegeben werden kann.

2. Nahrungsmittelhülle gemäß Anspruch 1, **dadurch gekennzeichnet, daß** das farbgebende Lebensmittel zusätzlich das Aroma und/oder den Geschmack eines in der Hülle befindlichen Nahrungsmittels verstärkt oder modifiziert.

3. Nahrungsmittelhülle gemäß Anspruch 1, **dadurch gekennzeichnet, daß** das farbgebende Mittel fest ist und eine maximale Partikelgröße bevorzugt weniger als 0,5 mm aufweist.

4. Nahrungsmittelhülle gemäß Anspruch 3, **dadurch gekennzeichnet, daß** das feste farbgebende Mittel eine mittlere Partikelgröße von weniger als 0,3 mm, bevorzugt weniger als 0,2 mm, besonders bevorzugt 5 bis 300 µm, speziell 10 bis 150 µm, aufweist.

5. Nahrungsmittelhülle gemäß Anspruch 1 oder 2, **dadurch gekennzeichnet, daß** das farbgebende Mittel flüssig und/oder in Wasser löslich ist.

6. Nahrungsmittelhülle gemäß einem oder mehreren der Ansprüche 1 bis 5, **dadurch gekennzeichnet, daß** das farbgebende Mittel mit mindestens einem Öl, bevorzugt mit einem tierischen oder pflanzlichen Öl, kombiniert ist.

7. Nahrungsmittelhülle gemäß einem oder mehreren der Ansprüche 1 bis 6, **dadurch gekennzeichnet, daß** deren Innenseite mit 3 bis 18 g/m², bevorzugt mit 5 bis 15 g/m², des farbgebenden Mittels imprägniert und/oder beschichtet ist.

8. Nahrungsmittelhülle gemäß einem oder mehreren der Ansprüche 2 bis 7, **dadurch gekennzeichnet, daß** es sich um eine Hülle auf Basis von regenerierter Cellulose handelt, die zusätzlich eine Innenverstärkung, bevorzugt aus einem Faserpapier, aufweist.

9. Verwendung der Nahrungsmittelhülle gemäß einem oder mehreren der Ansprüche 1 bis 8 als künstliche Wursthülle, bevorzugt für Roh- oder Brühwurst, insbesondere für Salami.

## Claims

1. A tubular food casing produced by the viscose process and based on regenerated cellulose which is impregnated or coated on the inside with at least one transferrable food additive wherein the food additive comprises at least one foodstuff colorant and/or one coloring foodstuff, selected from the group of sugar coloring, cochineal red A, brown HT, carmine, paprika oleoresin, concentrates and extracts of elderberry, plums or tomatoes, cereals and preparations thereof, spices, coffee, cocoa, chicory, carob bean meal, fruits, paprika and also mixtures thereof, but no binder, and wherein the foodstuff colorant and/or the coloring foodstuff is combined with lecithin, wherein the food additive can be released to a food situated in the casing.

2. The food casing as claimed in claim 1, wherein the coloring foodstuff additionally enhances or modifies the aroma and/or flavor of a food situated in the casing.

3. The food casing as claimed in claim 1, wherein the coloring agent is solid and has a maximum particle size preferably less than 0.5 mm.

4. The food casing as claimed in claim 3, wherein the solid coloring agent has a mean particle size of less than 0.3 mm, preferably less than 0.2 mm, particularly preferably 5 to 300 µm, especially 10 to 150 µm.

5. The food casing as claimed in claim 1 or 2, wherein the coloring agent is liquid and/or watersoluble.

6. The food casing as claimed in one or more of claims 1 to 5, wherein the coloring agent is combined with at least one oil, preferably with an animal or vegetable oil.

7. The food casing as claimed in one or more of claims 1 to 6, wherein its inside is impregnated and/or coated with 3 to 18 g/m², preferably 5 to 15 g/m², of the coloring agent.

8. The food casing as claimed in one or more of claims 2 to 7, wherein the casing is one based on regenerated cellulose which additionally has an internal reinforcement, preferably made of a fibrous paper.

9. The use of the food casing as claimed in one or more of claims 1 to 8 as artificial sausage casing, preferably for raw sausage or scalded-emulsion sausage, in particular for salami.

## Revendications

1. Enveloppe tubulaire pour produit alimentaire fabriquée selon le procédé à la viscose à base de cellulose régénérée, qui est imprégnée ou revêtue sur la face interne d'au moins un additif pour produit alimentaire transférable, **caractérisée en ce que** l'additif pour produit alimentaire comprend au moins un colorant alimentaire et/ou un produit alimentaire chromophore choisi dans le groupe de la couleur de sucre, du rouge cochenille A, du brun HT, du carmin, d'une oléorésine de paprika, de concentrés et d'extraits de sureau noir, de prune ou de tomate, de céréales et de leurs préparations, d'aromates, de café, de cacao, de chicorée, de farine de caroube, de fruits, de paprika ainsi que de leurs mélanges, mais pas de liant, et **en ce que** le colorant alimentaire et/ou le produit alimentaire chromophore est ou sont combinés à de la lécithine, dans laquelle l'additif pour produit alimentaire peut être fourni par un produit alimentaire se trouvant dans l'enveloppe.

2. Enveloppe pour produit alimentaire selon la revendication 1, **caractérisée en ce que** le produit alimentaire chromophore renforce ou modifie en outre l'arôme et/ou le goût d'un produit alimentaire se trouvant dans l'enveloppe.

3. Enveloppe pour produit alimentaire selon la revendication 1, **caractérisée en ce que** le produit chromophore est solide et présente une taille particulaire maximale de préférence inférieure à 0,5 mm.

4. Enveloppe pour produit alimentaire selon la revendication 3, **caractérisée en ce que** le produit chromophore solide présente une taille particulaire moyenne inférieure à 0,3 mm, de préférence inférieure à 0,2 mm, tout particulièrement de 5 à 300 µm, spécialement de 10 à 150 µm.

5. Enveloppe pour produit alimentaire selon la revendication 1 ou 2, **caractérisée en ce que** le produit chromophore est liquide et/ou est soluble dans l'eau.

6. Enveloppe pour produit alimentaire selon une ou plusieurs des revendications 1 à 5, **caractérisée en ce que** le produit chromophore est combiné à au moins une huile, de préférence à une huile animale ou végétale.

7. Enveloppe pour produit alimentaire selon une ou plusieurs des revendications 1 à 6, **caractérisée en ce que** sa face interne est imprégnée et/ou revêtue de 3 à 18 g/m², de préférence de 5 à 15 g/m², du produit chromophore.

8. Enveloppe pour produit alimentaire selon une ou plusieurs des revendications 2 à 7, **caractérisée en ce qu'**il s'agit d'une enveloppe à base de cellulose régénérée qui présente en outre un renfort interne, de préférence en papier fibreux.

9. Utilisation de l'enveloppe pour produit alimentaire selon une ou plusieurs des revendications 1 à 8 comme enveloppe de saucisse artificielle, de préférence pour saucisse crue ou saucisse à bouillir, en particulier pour salami.
